# EUROPEAN PATENT SPECIFICATION

(11) **EP 1 582 707 B1**
(45) Date of publication and mention of the grant of the patent: **10.01.2007**
(21) Application number: 05006757.8
(22) Date of filing: 29.03.2005
(51) Int. Cl.: F01N 3/023, F01N 9/00, F01N 11/00, F02D 41/02

(54) **Inspection system of particulate filter regeneration system**
Inspektionssystem eines Regenerationssytems eines Partikelfilters
Système d'inspection d'un système de régénration d'un filtre à particules.

(30) Priority: 29.03.2004 JP 2004095726
(43) Date of publication of application: 05.10.2005
(73) Proprietor: DENSO CORPORATION, Kariya-city, Aichi-pref. 448-8661 (JP)
(72) Inventor: Noda, Yoshihiro, Kariya-city, Aichi-pref., 448-8661 (JP); Sawaoka, Hideo, Kariya-city, Aichi-pref., 448-8661 (JP)
(74) Representative: TBK-Patent

(56) References cited:
- EP-A- 1 544 432
- US-A1- 2003 126 858
- PATENT ABSTRACTS OF JAPAN vol. 2003, no. 02, 5 February 2003 (2003-02-05) & JP 2002 295240 A (ISUZU MOTORS LTD), 9 October 2002 (2002-10-09)

## Description

The present invention relates to an inspection system of a regeneration system regenerating a particulate filter, which collects exhaust particulate matters discharged from a diesel engine.

In recent years, improvement of a cleaning level of emission (exhaust gas) of an internal combustion engine mounted to an automobile and the like has been required. Specifically, in a diesel engine using diesel oil as fuel, elimination of exhaust particulate matters such as soot contained in the exhaust gas is required in addition to elimination of carbon monoxide, hydrocarbon and nitrogen oxides. Therefore, a particulate filter is disposed in an exhaust passage for collecting the exhaust particulate matters contained in the exhaust gas.

The particulate filter is formed by a porous ceramic body, for instance. The particulate matters are collected by surfaces or pores of porous partition walls of the particulate filter when the exhaust gas passes through the partition walls. If a deposition quantity of the particulate matters deposited on the particulate filter becomes excessive due to the collection, a collection ability of the particulate filter reduces or a flow resistance of the exhaust gas at the particulate filter increases. Therefore, a regeneration system for regenerating the particulate filter by eliminating the particulate matters deposited on the particulate filter at suitable timing is provided.

For instance, a regeneration system disclosed in JP-A-2004-11446 (Patent Document 1) performs a post-injection for injecting fuel during an expansion stroke (an exhaustion stroke) of the engine in order to supply the fuel to the particulate filter. Thus, by using combustion heat of the fuel, the regeneration system increases temperature of the particulate filter to eliminate the deposited particulate matters by combustion. A regeneration system disclosed in JP-A-2002-256846 (Patent Document 2) is equipped with a burner near the particulate filter, and heats and combusts the particulate matters, which are deposited on the particulate filter, with flames discharged from the burner.

Further, US-A-2003/126858 discloses a method and a device for controlling an exhaust gas aftertreatment system, in particular of an internal combustion engine. The exhaust gas aftertreatment system may be a catalyst and/or particle filter. A defect in the region of the exhaust gas aftertreatment system can be detected based on a difference between an amount of particles generated in a first operating state and an amount of particles removed in a second operating state. In the first operating state, which corresponds to a normal operation of the internal combustion engine, created particles are deposited in the particle filter. In the second operating state the particle filter is regenerated, i.e. the particles deposited in the particle filter are oxidized or combusted.

In the case where the internal combustion engine is equipped with the above particulate filter regeneration system, it is necessary to inspect whether the particulate filter regeneration system operates properly or not before the engine is shipped or when the particulate filter is replaced.

In order to accurately inspect the particulate filter regeneration system, the inspection should be preferably performed by depositing a predetermined quantity of the particulate matters on the particulate filter first, and by determining whether the deposited particulate matters are eliminated properly then.

Usually, an operating state of the engine is controlled so that a very small quantity of the particulate matters is generated. Therefore, it takes a long time to deposit the predetermined quantity of the particulate matters. Meanwhile, a large amount of fuel is wasted.

It is therefore an object of the present invention to provide an inspection system capable of shortening an inspection time and of reducing a fuel consumption when a particulate filter regeneration system is inspected.

According to an aspect of the present invention, an inspection system of a particulate filter regeneration system of a diesel engine includes ordering means, controlling means, sensing means, regeneration processing means, and determining means. The ordering means orders a start of inspection of the particulate filter regeneration system. The controlling means controls an operating state of the diesel engine based on the order of the start of the inspection to switch the diesel engine between a first operating state, in which particulate matters are easily generated, and a second operating state, in which the generation of the particulate matters is inhibited. The sensing means senses a physical quantity relevant to a deposition quantity of the particulate matters deposited on a particulate filter. The regeneration processing means starts regeneration processing of the particulate filter if it is determined that the deposition quantity of the particulate matters reaches a first predetermined quantity. The determining means determines whether a function of the particulate filter regeneration system is normal based on whether the deposited particulate matters are eliminated by the regeneration processing.

The inspection system of the present invention controls the operating state of the diesel engine to the fist operating state, in which the particulate matters are easily generated, when the inspection system inspects the particulate filter regeneration system. Therefore, the deposition quantity of the particulate matters necessary for the inspection can be obtained in a shorter period than the conventional system. Accordingly, the fuel consumption during the deposition can be also reduced.

The regeneration processing of the particulate filter is started when the deposition quantity of the particulate matters necessary for the inspection is obtained. Then, based on whether the particulate matters are eliminated by the regeneration processing, it is determined whether the function of the particulate filter regeneration system is normal. Thus, the regeneration processing for diagnosing the normality of the function is performed after the predetermined deposition quantity of the particulate matters is obtained. As a result, accuracy of the inspection of the regeneration processing is improved.

Features and advantages of an embodiment will be appreciated, as well as methods of operation and the function of the related parts, from a study of the following detailed description, the appended claims, and the drawings, all of which form a part of this application. In the drawings:
Fig. 1 is a schematic diagram showing an inspection system applied to a particulate filter regeneration system of a diesel engine according to an embodiment of the present invention;
Fig. 2 is a flowchart showing a main routine of inspection processing of the particulate filter regeneration system according to the embodiment;
Fig. 3 is a flowchart showing setting processing of performance permission conditions of compulsory deposition processing and compulsory regeneration processing according to the embodiment;
Fig. 4 is a flowchart showing processing for diagnosing a failure of a differential pressure sensor according to the embodiment;
Fig. 5 is a flowchart showing processing for prohibiting failure diagnosis of a diesel oxidation catalyst during a compulsory drive according to the embodiment;
Fig. 6 is a flowchart showing regeneration processing of a particulate filter as failsafe control according to the embodiment;
Fig. 7 is a flowchart showing processing of an electronic control unit for starting inspection according to the embodiment; and
Fig. 8 is a flowchart showing processing for correcting an actual measurement value of a sensor according to the embodiment.

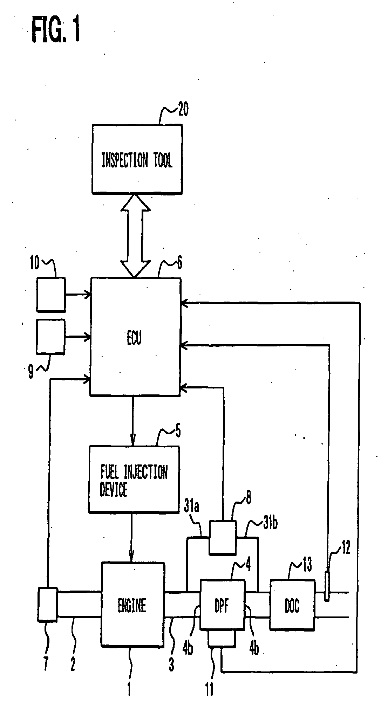

Referring to Fig. 1, an inspection system of a particulate filter regeneration system according to an embodiment of the present invention applied to a diesel engine is illustrated. As shown in Fig. 1, the diesel engine includes an engine main body 1, to which an intake passage 2 and an exhaust passage 3 are connected. Intake air passes through the intake passage 2. Exhaust gas (emission) discharged from cylinders of the engine main body 1 passes through the exhaust passage 3. A diesel particulate filter (DPF) 4 is disposed in the exhaust passage 3. The DPF 4 is formed by a porous ceramic body made of cordierite, silicon carbide and the like. The exhaust gas entering the DPF 4 through an inlet 4a permeates porous partition walls and flows downstream through an outlet 4b. At that time, the DPF 4 collects exhaust particulate matters contained in the exhaust gas. A quantity of the deposited particulate matters increases as an operation time passes. An oxidation catalyst, of which a main component is a noble metal such as platinum or palladium, is supported on a surface of a filter main body of the DPF 4. The oxidation catalyst oxidizes, combusts and eliminates the exhaust particulate matters under a predetermined temperature condition.

A fuel injection device 5 including injectors for supplying the fuel to the respective cylinders of the engine main body 1 is provided. An electronic control unit (ECU) 6 is provided for controlling a fuel supply quantity and fuel injection timing of the fuel injection device 5. The ECU 6 controls the operating state of the engine and performs regeneration processing control of the DPF 4. The particulate filter regeneration system of the present embodiment is structured centered on the ECU 6. The ECU 6 forms a part of the inspection system for controlling the operating state of the diesel engine to an operating state, in which the particulate matters are easily generated, when it is inspected whether the regeneration processing control by the regeneration system functions properly.

Various signals indicating the actual operating state of the engine are inputted to the ECU 6. The ECU 6 controls the operating state of the diesel engine to a desired operating state.

A differential pressure sensor 8 senses a differential pressure between an upstream side and a downstream side of the DPF 4. A sensing signal of the differential pressure sensor 8 is inputted to the ECU 6 as a value relevant to the particulate matter deposition quantity (the quantity of the particulate matters deposited on the DPF 4). A first branch passage 31a branches from the exhaust passage 3 on the upstream side of the DPF 4, and a second branch passage 31b branches from the exhaust passage 3 on the downstream side of the DPF 4. The differential pressure sensor 8 is interposed between the branch passages 31a, 31b and senses the differential pressure between the inlet 4a (the upstream side) and the outlet 4b (the downstream side) of the DPF 4. The differential pressure sensed by the differential pressure sensor 8 is correlated with the particulate matter deposition quantity (PM deposition quantity) of the DPF 4. The differential pressure increases as the PM deposition quantity increases and a pressure loss increases.

A weight sensor 11 for sensing weight of the DPF 4 as a value relevant to the PM deposition quantity is disposed near the DPF 4. A sensing signal of the weight sensor 11 is also inputted to the ECU 6. Instead of using both of the differential pressure sensor 8 and the weight sensor 11, either one of them may be employed.

An air flow meter 7 is disposed in the intake passage 2. The air flow meter 7 senses a flow rate of the intake air (an intake air quantity) and outputs the sensing signal to the ECU 6. Sensing signals of an accelerator position sensor 9 for sensing a position of an accelerator and a crank angle sensor 10 for sensing a rotation speed of the engine are also inputted to the ECU 6.

A diesel oxidation catalyst (DOC) 13 for cleaning harmful components of the exhaust gas other than the particulate matters is disposed in the exhaust passage 3 downstream of the DPF 4. An oxygen sensor 12 is disposed downstream of the DOC 13 for ensuring an effect of the DOC 13 of eliminating the harmful components. A quantity of the remaining harmful components can be calculated by sensing an oxygen quantity in the exhaust gas. Alternatively, the quantity of the harmful components may be directly sensed by using gas sensors.

An inspection tool 20 is connected with the ECU 6 for inspecting whether the particulate filter regeneration processing control performed by the ECU 6 functions properly or not.

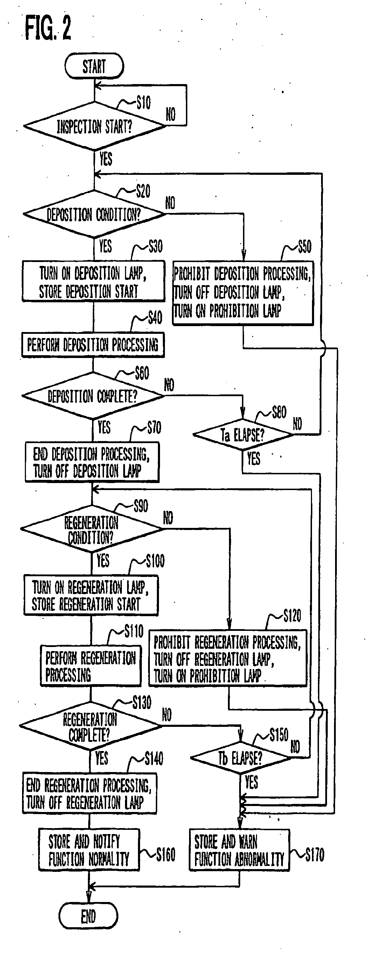

Next, the inspection of the regeneration processing control performed with the use of the inspection tool 20 will be explained based on flowcharts shown in Figs. 2 to 6.

The flowchart of Fig. 2 shows a main routine of the inspection processing. First, in Step S10 of the flowchart of Fig. 2, it is determined whether the inspection should be started based on whether an inspection starting order is outputted from the inspection tool 20 to the ECU 6. In the case where the inspection starting order is outputted, the processing proceeds to Step S20.

In Step S20, it is determined whether a performance permission condition of compulsory deposition processing is satisfied. In the compulsory deposition processing, the ECU 6 controls the operating state of the engine to a first operating state, in which the particulate matters are easily generated.

The first operating state in which the particulate matters are easily generated can be realized by operating the diesel engine based on either one or a combination of following Methods (1) to (7).

Method (1): to increase the fuel injection quantity than usual.

Method (2): to fully open an exhaust gas recirculation valve (EGR valve), which recirculates part of the exhaust gas of the engine and mixes the recirculated exhaust gas with fresh intake air.

Method (3): to enlarge a size of each oil droplet by making a fuel spray, which is injected into each cylinder of the engine, coarse.

Method (4): to decrease a common rail pressure from an appropriate value in the case where the fuel injection device 5 is provided by a publicly known common rail system.

Method (5): to decrease combustion temperature by switching a multi-stage injection (a pilot injection, a pre-injection, a main injection, an after injection and the like) to a single injection.

Method (6): to decrease a pressure in the cylinder by delaying the fuel injection timing.

Method (7): to decrease the intake air quantity by invalidating supercharging operation performed by a turbocharger in the case where the supercharging operation is performed by the turbocharger.

If it is determined that the performance permission condition of the compulsory deposition processing is satisfied in Step S20, the processing proceeds to Step S30. In Step S30, a compulsory deposition lamp mounted in the inspection tool 20 for indicating that the compulsory deposition processing is being performed is turned on. Meanwhile, the start of the compulsory deposition processing is stored in a storage area of a nonvolatile memory such as EEPROM of the ECU 6. In Step S40, the ECU 6 operates the diesel engine in the first operating state, in which the particulate matters are easily generated. Thus, the compulsory deposition processing for compulsorily depositing the particulate matters on the DPF 4 is performed. The PM deposition quantity achieved by the compulsory deposition processing is sensed by the differential pressure sensor 8 and the weight sensor 11.

In Step S60, it is determined whether the PM deposition quantity necessary for the inspection is achieved and the compulsory deposition processing is completed based on whether the measured PM deposition quantity reaches a first predetermined quantity. If the result of the determination in Step S60 is "NO", the processing proceeds to Step S80. In Step S80, it is determined whether a first predetermined time Ta has elapsed after the compulsory deposition processing is started.

The first predetermined time Ta is set long enough to increase the PM deposition quantity to the first predetermined quantity in the case where the compulsory deposition processing is performed normally. Therefore, if the PM deposition quantity does not reach the first predetermined quantity even though the first predetermined time Ta elapses, it can be estimated that a failure of some kind has occurred in the fuel injection device 5, the ECU 6, the differential pressure sensor 8 or the weight sensor 11. Therefore, if the result of the determination in Step S80 is "'YES", the processing proceeds to Step S170, and function abnormality processing is performed in Step S170. If the result of the determination in Step S80 is "NO", the processing returns to the processing of Step S20.

If the result of the determination in Step S20 is "NO", the processing proceeds to Step S50. In Step S50, the compulsory deposition processing is prohibited and the prohibition is stored in the storage area of the ECU 6. Meanwhile, the compulsory deposition lamp is turned off and a compulsory drive prohibition lamp is turned on. The compulsory drive prohibition lamp indicates that compulsory drive including the compulsory deposition processing and compulsory regeneration processing (explained after) is prohibited. Then, the processing proceeds to the function abnormality processing of Step S170.

If the result of the determination in Step S60 is "YES", the processing proceeds to Step S70. In Step S70, compulsory deposition processing ending processing is performed and the compulsory deposition lamp is turned off. In the compulsory deposition processing ending processing, a compulsory deposition period in which the compulsory deposition processing is performed is calculated and stored in the storage area of the ECU 6. Meanwhile, the operating state of the diesel engine is switched from the first operating state to a normal operating state (a second operating state) inhibiting the generation of the particulate matters. Meanwhile, the end of the compulsory deposition processing is stored in the ECU 6. Thus, further deposition of the particulate matters after the start of the compulsory regeneration processing (explained after) is inhibited. As a result, the effect of the compulsory regeneration processing can be determined accurately.

Then, in Step S90, it is determined whether a performance permission condition of the compulsory regeneration processing for eliminating the particulate matters, which are deposited on the DPF 4 during the compulsory deposition processing, is satisfied.

If the result of the determination in Step S90 is "YES", the processing proceeds to Step S100. In Step S100, a compulsory regeneration lamp, which is mounted on the inspection tool 20 for indicating that the compulsory regeneration processing is being performed, is turned on. Meanwhile, in Step S100, the start of the compulsory regeneration processing is stored in the storage area of the ECU 6. In Step S110, the compulsory regeneration processing is performed.

In the compulsory regeneration processing, the post-injection for injecting the fuel in the exhaustion stroke of the engine is performed, and the fuel is supplied to the DPF 4. At that time, the fuel is heated by the DPF 4 and combusted. By using the combustion heat of the fuel, the temperature of the oxidation catalyst of the DPF 4 is increased to combust and eliminate the deposited particulate matters. Instead of performing the post-injection, a burner may be disposed near the DPF 4 for directly heat and combust the particulate matters deposited on the DPF 4.

The PM deposition quantity is continuously measured with the use of the differential pressure sensor 8 and the weight sensor 11 during the compulsory regeneration processing. In Step S130, it is determined whether the particulate matters are eliminated and the compulsory regeneration processing is completed based on whether the measured PM deposition quantity has decreased below a second predetermined quantity. If the result of the determination in Step S130 is "NO", the processing proceeds to Step S150. In Step S150, it is determined whether a second predetermined time Tb has elapsed after the compulsory regeneration processing is started.

The second predetermined time Tb is set long enough to decrease the PM deposition quantity below the second predetermined quantity in the case where the compulsory regeneration processing is performed normally. Therefore, if the PM deposition quantity does not decrease below the second predetermined quantity even though the second predetermined time Tb elapses, it can be estimated that a failure of some kind occurs in the fuel injection device 5, the ECU 6, the differential pressure sensor 8 or the weight sensor 11 and an abnormality occurs in the regeneration processing control of the DPF 4. Therefore, if the result of the determination in Step S150 is "YES", the processing proceeds to Step S170, and the function abnormality processing is performed in Step S170. If the result of the determination in Step S150 is "NO", the processing returns to the processing of Step S90.

If the result of the determination in Step S90 is "NO", the processing proceeds to Step S120. In Step S120, the compulsory regeneration processing is prohibited, and the prohibition is stored in the storage area of the ECU 6. Meanwhile, the compulsory regeneration lamp is turned off and the compulsory drive prohibition lamp is turned on. Then, the processing proceeds to the function abnormality processing of Step S170.

If the result of the determination in Step S130 is "YES", the processing proceeds to Step S140. In Step S140, compulsory regeneration processing ending processing is performed and the compulsory regeneration lamp is turned off. In the compulsory regeneration processing ending processing, a compulsory regeneration period in which the compulsory regeneration processing is performed is calculated and stored in the storage area of the ECU 6. Meanwhile, the end of the compulsory regeneration processing is stored.

If the processing of Step S140 is ended, the processing proceeds to Step S160, and function normality processing is performed in Step S160. In the function normality processing, the inspection tool 20 notifies an operator that the function of the DPF regeneration processing control is normal by turning on a lamp, for instance. Meanwhile, the ECU 6 stores the normality of the regeneration processing control as diagnosis information.

In Step S170, the inspection tool 20 notifies the operator that the function of the DPF regeneration processing control is abnormal by turning on a lamp, for instance. Modes for turning on and off the various lamps of the inspection tool 20 are differentiated in accordance with the time points of the occurrence of the abnormalities or the causes of the abnormalities. Therefore, the operator can estimate the causes of the abnormalities from the modes of the turning on and off of the various lamps. The ECU 6 stores the abnormality of the regeneration processing control as the diagnosis information.

In the present embodiment, the information about the start and the end of the compulsory deposition processing and the start and the end of the compulsory regeneration processing are stored in the storage area of the ECU 6. Therefore, even in the case where the compulsory regeneration processing is interrupted when a power source is shut off, for instance, the incompletion of the compulsory regeneration processing can be recognized when the system is restored. Then, the particulate matters remaining in the DPF 4 are eliminated and the inspection is performed again, for instance. Thus, necessary processing can be performed.

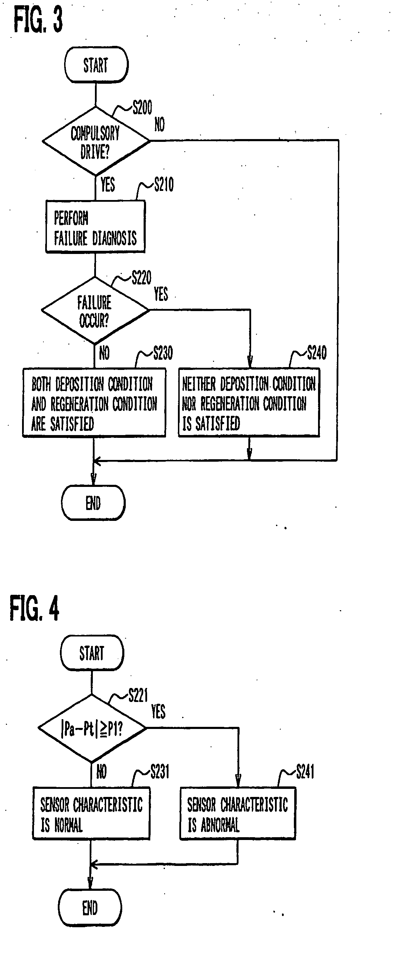

Next, processing shown by a flowchart of Fig. 3 will be explained. In the processing of Fig. 3, failure diagnosis of the ECU 6 and the various sensors constituting the DPF regeneration system is performed during the compulsory drive, in which the compulsory deposition processing or the compulsory regeneration processing is performed. If the DPF regeneration system is diagnosed as having a failure, the diagnosis of whether the function of the regeneration processing control is normal or not cannot be performed properly. Therefore, in such a case, the processing shown by the flowchart of Fig. 3 determines that neither the performance permission condition of the compulsory deposition processing nor the performance permission condition of the compulsory regeneration processing is satisfied.

First, in Step S200, it is determined whether the compulsory drive, in which the compulsory deposition processing or the compulsory regeneration processing is performed, is being performed. This determination can be performed based on the start and the end of the compulsory deposition processing and the start and the end of the compulsory regeneration processing stored in the storage area of the ECU 6, for instance.

If the result of the determination in Step S200 is "YES", the processing proceeds to Step S210. In Step S210, the failure diagnosis of the ECU 6 and the various sensors constituting the DPF regeneration system is performed. For instance, as for the ECU 6, the ECU 6 performs self-diagnosis. As for the various sensors, the failure diagnosis of each sensor is performed based on a difference between an actual measurement value and a theoretical value (as explained after).

In Step S220, it is determined whether the failure occurs in the DPF regeneration system based on the result of the failure diagnosis performed in Step S210. If it is determined that the failure is not occurring, the processing proceeds to Step S230. In Step S230, it is determined that both the performance permission condition of the compulsory deposition processing and the performance permission condition of the compulsory regeneration processing are satisfied. If it is determined that the failure occurs in the DPF regeneration system in Step S220, the processing proceeds to Step S240. In Step S240, it is determined that neither the performance permission condition of the compulsory deposition processing nor the performance permission condition of the compulsory regeneration processing is satisfied.

The processing shown by the flowchart of Fig. 3 is repeated during the compulsory drive of the DPF regeneration system.

Processing shown by a flowchart of Fig. 4 is performed to diagnose the differential pressure sensor 8. In Step S221, An actual measurement value Pa, which is actually measured by the differential pressure sensor 8, and a theoretical value (a predicted value) Pt during the compulsory drive are calculated, and it is determined whether an absolute value of the difference between the actual measurement value Pa and the theoretical value Pt is "equal to or greater than" a predetermined value P1.

During the compulsory drive of the DPF regeneration system, the operating state of the diesel engine becomes the first predetermined operating state, in which the particulate matters are easily generated, and the compulsory deposition processing is performed. In the compulsory regeneration processing, the regeneration processing is performed from the PM deposition quantity corresponding to the first predetermined quantity. Therefore, the increase or the decrease of the PM deposition quantity accompanying the elapsed time of the compulsory deposition processing or the compulsory regeneration processing can be predicted. By comparing the theoretical value corresponding to the increase or the decrease of the PM deposition quantity with the actual measurement value, the failure of the differential pressure sensor 8 can be determined.

More specifically, when the absolute value of the difference between the actual measurement value Pa and the theoretical value Pt is greater than the predetermined value P1, the differential pressure sensor 8 cannot output the correct measurement value. In such a case, it can be assumed that a failure of some kind occurs. Therefore, in Step S241, it is determined that a sensor characteristic is abnormal and neither the performance permission condition of the compulsory deposition processing nor the performance permission condition of the compulsory regeneration processing is satisfied. If the difference is less than the predetermined value P1, it can be assumed that the measurement value of the differential pressure sensor 8 is correct. In such a case, the processing proceeds to Step S231, and it is determined that the sensor characteristic is normal and both the performance permission condition of the compulsory deposition processing and the performance permission condition of the compulsory regeneration processing are satisfied.

If the failure occurs in the DPF regeneration system and it is determined that neither the performance permission condition of the compulsory deposition processing nor the performance permission condition of the compulsory regeneration processing is satisfied, the performance of the compulsory deposition processing and the compulsory regeneration processing is prohibited as shown in the flowchart of Fig. 2. In the case where the failure occurs in the DPF regeneration system, there is a high possibility that the regeneration processing does not function normally. Therefore, in such a situation, the operation of the DPF regeneration system is stopped to avoid an unnecessary load on the regeneration system.

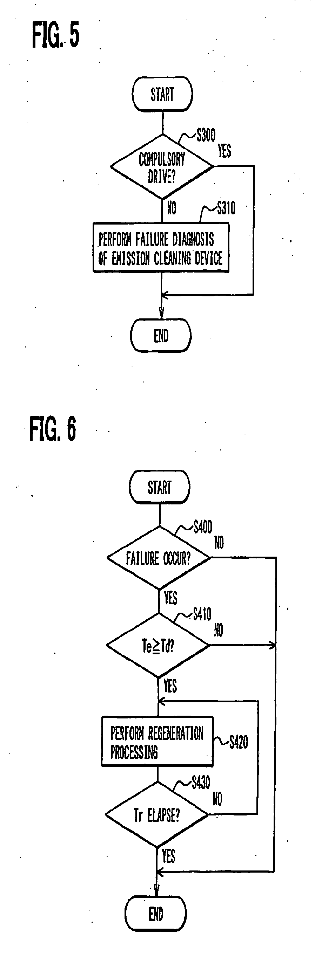

Next, processing shown by a flowchart of Fig. 5 will be explained. In the present embodiment, in order to perform the inspection of the DPF regeneration system accurately in a short period, the above compulsory deposition processing and compulsory regeneration processing are performed. During the compulsory deposition processing or the compulsory regeneration processing, the diesel engine is operated in the operating state different from the normal operating state. Therefore, contents of various harmful matters in the emission are different from those of the normal operating state. If the failure diagnosis of the DOC 13 as the emission cleaning device is performed in such a state, there is a possibility that the diagnosis is performed erroneously. Therefore, during the compulsory drive, the failure diagnosis of the DOC 13 is prohibited by the processing shown by the flowchart of Fig. 5.

More specifically, first, in Step S300 of the flowchart of Fig. 5, it is determined whether the compulsory drive of the DPF regeneration system is being performed. Only when the result of the determination in Step S300 is "NO", the processing proceeds to Step S310, and the failure diagnosis of the emission cleaning device is performed in Step S310- If the result of the determination in Step S300 is "YES", the processing of Step S310 is skipped, and the failure diagnosis of the emission cleaning device is not performed.

For instance, the failure diagnosis of the emission cleaning device is performed based on the sensing signal of the oxygen sensor 12. More specifically, it is determined that the DOC 13 is abnormal if a content of the harmful component in the exhaust gas downstream of the DOC 13 greater than a specified value is detected.

Next, processing shown by a flowchart of Fig. 6 will be explained. If the failure occurs in the sensor, which measures the PM deposition quantity, when the DPF regeneration system is actually used, the regeneration processing cannot be performed at appropriate timing. Therefore, in the processing shown by the flowchart of Fig. 6, the regeneration of the DPF 4 is performed as failsafe control by using the compulsory deposition period and the compulsory regeneration period calculated in the inspection of the DPF regeneration system.

The compulsory deposition period Td is a period necessary to deposit the first predetermined quantity of the particulate matters in the case where the diesel engine is operated in the first operating state, in which the particulate matters are easily deposited. Therefore, if the regeneration processing is performed at least once when the compulsory deposition period Td elapses, the regeneration processing can be started before the excess particulate matters are deposited because the PM deposition quantity is smaller in the normal operating state than in the first operating state.

The' compulsory regeneration period Tr is a period necessary to eliminate the first predetermined quantity of the particulate matters by performing the compulsory regeneration processing. Even if the normal operation is performed for the compulsory deposition period Td, the PM deposition quantity is smaller than the first predetermined quantity. Therefore, the particulate matters can be eliminated and the DPF 4 can be regenerated surely by performing the regeneration processing for the compulsory regeneration period Tr.

Thus, even if the PM deposition quantity cannot be measured correctly because of the failure in the differential pressure sensor 8 and the like, clogging of the DPF 4 and the like can be surely prevented by performing the regeneration processing as the failsafe control based on the stored compulsory deposition period Td and compulsory regeneration period Tr.

Next, the processing shown by the flowchart of Fig. 6 will be explained.

First, in Step S400 of the flowchart of Fig. 6, it is determined whether the failure occurs in the sensor measuring the PM deposition quantity. For instance, it can be determined that the failure occurs in the sensor if the sensing signal of the sensor indicates a value out of a specified range or a move of the sensing signal is abnormal. Processing explained below may be performed irrespective of whether the sensor is normal or abnormal.

If the result of the determination in Step S400 is "YES", it is determined whether a driving period Te of the engine since the previous regeneration processing is equal to or longer than the compulsory deposition period Td in Step S410. If the result of the determination in Step S410 is "YES", the regeneration processing of the DPF 4 is performed in Step S420.

In Step S430, it is determined whether an elapsed period since the start of the regeneration processing reaches the compulsory regeneration period Tr. If the result of the determination in Step S430 is "NO", the regeneration processing in Step S420 is continued. Thus, the regeneration processing is performed continuously until the compulsory regeneration period Tr elapses.

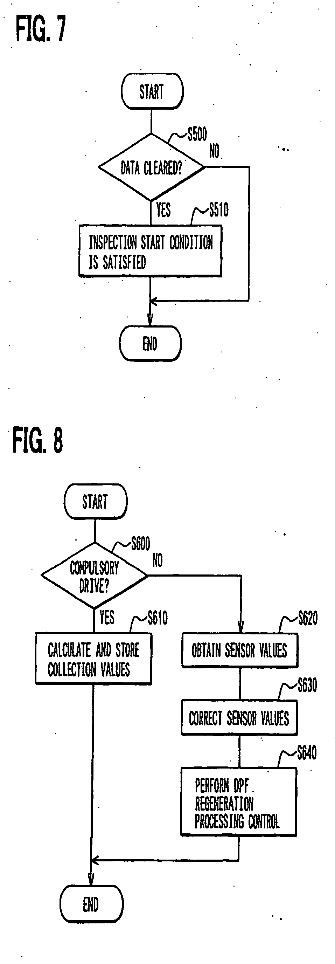

In the present embodiment, the inspection of the DPF regeneration system is started when the inspection tool 20 orders the inspection start. Alternatively, the inspection may be started when the ECU 6 automatically recognizes the inspection start order as shown by a flowchart of Fig. 7.

If the automobile and the like equipped with the diesel engine is actually used, the history of the inspection of the DPF regeneration system by the compulsory drive must be stored in the storage area of the ECU 6.

Therefore, if it is found that the data concerning the compulsory drive have been cleared when the storage area storing the data is referred to, it can be assumed that the inspection has not been performed or the DPF 4 has been replaced and the data have been erased by the operator.

Therefore, in Step S500, it is determined whether the data concerning the compulsory drive have been cleared. If the result of the determination in Step S500 is "YES", the inspection start condition is considered to be satisfied in Step S510. Thus, the ECU 6 automatically recognizes the inspection start order and starts the inspection (the compulsory deposition processing).

In addition to the data concerning the compulsory drive, the ECU 6 may refer to operation data concerning the operation of the DPF regeneration system such as the PM deposition quantity. It is because the PM deposition quantity is calculated to determine the timing for starting the regeneration processing of the DPF 4 and is stored in the ECU 6.

In the present embodiment, the actual measurement value of the sensor during the compulsory drive is compared with the theoretical value during the compulsory drive, and the failure of the sensor is determined based on the difference between the actual measurement value and the theoretical value. Alternatively, the actual measurement value of the sensor may be corrected by using the difference.

More specifically, as shown by a flowchart of Fig. 8, if it is determined that the compulsory drive is being performed in Step S600, a correction value is calculated by calculating the difference between the actual measurement value and the theoretical value every time the PM deposition quantity changes, and is stored in Step S610. When the engine equipped with the DPF regeneration system of the present embodiment is actually used, the various sensor values are obtained in Step S620. Then, in Step S630, each one of the obtained sensor values is corrected by using the stored correction value. Then, in Step S640, the regeneration processing control is performed by using the corrected sensor values.

Thus, the differences in the output characteristics of the various sensors due to the individual differences can be corrected and the PM deposition quantity can be calculated accurately.

The failure determination of the sensor and the correction of the sensor value based on the actual measurement value and the theoretical value may be performed in combination. For instance, the failure determination may be performed if the difference between the actual measurement value and the theoretical value is equal to or greater than a predetermined value, and the correction of the sensor value may be performed if the difference is less than the predetermined value.

The present invention should not be limited to the disclosed embodiment, but may be implemented in many other ways, as defined by the appended claims.

## Claims

1. An inspection system of a particulate filter regeneration system of a diesel engine, **characterized by**:
ordering means (S10) for ordering a start of inspection of the particulate filter regeneration system;
controlling means (6) for controlling an operating state of the engine to switch the engine between a first operating state, in which particulate matters are easily generated, and a second operating state, in which the generation of the particulate matters is inhibited, based on the order of the start of the inspection;
sensing means (8, 11) for sensing a physical quantity relevant to a deposition quantity of the particulate matters deposited on a particulate filter (4);
regeneration processing means (S110) for starting regeneration processing of the particulate filter (4) if it is determined that the deposition quantity of the particulate matters reaches a first predetermined quantity; and
determining means (S130, S150, S160, S170) for determining whether a function of the particulate filter regeneration system is normal based on whether the deposited particulate matters are eliminated by the regeneration processing.

2. The inspection system as in claim 1, wherein
the ordering means (S10) is provided by an inspection tool (20), and
the inspection tool (20) orders the start of the inspection by transmitting a predetermined command to the controlling means (6) controlling the operating state of the engine.

3. The inspection system as in claim 1, wherein
the ordering means (S10) is provided by the controlling means (6) controlling the operating state of the engine,
the controlling means (6) refers to a storage area storing operation data relevant to operation of the particulate filter regeneration system, and
the controlling means (6) automatically recognizes the start of the inspection if the controlling means (6) recognizes that the operation data have been cleared.

4. The inspection system as in any one of claims 1 to 3, further comprising:
deposition processing abnormality determining means (S60, S80, S170) for performing abnormality determination of the deposition processing if the deposition quantity of the particulate matters calculated based on the physical quantity sensed by the sensing means (8, 11) does not reach the first predetermined quantity even though the controlling means (6) operates the engine in the first operating state.

5. The inspection system as in any one of claims 1 to 4, wherein
the controlling means (6) controls the operating state of the engine to a second operating state, in which generation of the particulate matters is reduced, after the regeneration processing means (S110) starts the regeneration processing of the particulate filter (4).

6. The inspection system as in any one of claims 1 to 5, further comprising:
storing means (S100, S140) for storing incompletion of the regeneration processing if the regeneration processing by the regeneration processing means (S110) is interrupted after the particulate matters are deposited on the particulate filter (4).

7. The inspection system as in any one of claims 1 to 6, further comprising:
failure diagnosing means (S210, S220, S230, S240, S221, S231, S241) for performing failure diagnosis of parts constituting the particulate filter regeneration system while the controlling means (6) operates the engine in the first operating state or while the regeneration processing means (S110) performs the regeneration processing of the particulate filter (4).

8. The inspection system as in claim 7, further comprising:
stopping means (S50, S120) for stopping the operation of the engine in the first operating state performed by the controlling means (6) and the regeneration processing performed by the regeneration processing means (S110) if a failure is detected by the failure diagnosing means (S210, S220, S230, S240, S221, S231, S241).

9. The inspection system as in claim 7 or 8, wherein
the failure diagnosing means (S210, S220, S230, S240, S221, S231, S241) diagnoses the failure of the sensing means (8, 11) by comparing an actual physical quantity, which is actually sensed by the sensing means (8, 11), with at least one of a predicted physical quantity, which should be sensed by the sensing means (8, 11) when the engine is operated in the first operating state, and a predicted physical quantity, which should be sensed by the sensing means (8, 11) when the regeneration processing means (S110) performs the regeneration processing.

10. The inspection system as in any one of claims 1 to 9, further comprising:
collection value storing means (S610) for calculating a difference between an actual physical quantity, which is actually sensed by the sensing means (8, 11), with at least one of a predicted physical quantity, which should be sensed by the sensing means (8, 11) when the engine is operated in the first operating state, and a predicted physical quantity, which should be sensed by the sensing means (8, 11) when the regeneration processing means (S110) performs the regeneration processing, and for storing the difference as a correction value of the physical quantity sensed by the sensing means (8, 11).

11. The inspection system as in any one of claims 1 to 10, further comprising:
an emission cleaning device (13) excluding the particulate filter (4); and
emission cleaning device failure diagnosing means (S300, S310) for performing failure diagnosis of the emission cleaning device (13), wherein
the emission cleaning device failure diagnosing means (S300, S310) suspends the failure diagnosis of the emission cleaning device (13) while the controlling means (6) operates the engine in the first operating state or while the regeneration processing means (S110) performs the regeneration processing.

12. The inspection system as in any one of claims 1 to 11, further comprising:
period storing means (S70, S140) for storing a compulsory deposition period, in which the controlling means (6) operates the engine in the first operating state, and a compulsory regeneration period, in which the regeneration processing means (S110) performs the regeneration processing.

13. The inspection system as in any one of claims 1 to 12, wherein
the controlling means (6) realizes the first operating state by increasing a fuel injection quantity than usual.

14. The inspection system as in any one of claims 1 to 13, wherein
the engine has an exhaust gas recirculation valve for recirculating a part of exhaust gas of the engine into intake air, and
the controlling means (6) realizes the first operating state by fully opening the exhaust gas recirculation valve.

15. The inspection system as in any one of claims 1 to 14, wherein
the controlling means (6) realizes the first operating state by making a fuel spray, which is injected into each cylinder of the engine, coarse such that a size of each oil droplet of the fuel is enlarged.

16. The inspection system as in any one of claims 1 to 15, wherein
the engine has a common rail, and
the controlling means (6) realizes the first operating state by decreasing a common rail pressure from an appropriate value.

17. The inspection system as in any one of claims 1 to 16, wherein
the controlling means (6) realizes the first operating state by switching from a multi-stage injection of fuel to a single-stage injection of the fuel such that a combustion temperature is decreased.

18. The inspection system as in any one of claims 1 to 17, wherein
the controlling means (6) realizes the first operating state by delaying a fuel injection timing such that a pressure in a cylinder of the engine is decreased.

19. The inspection system as in any one of claims 1 to 18, wherein
the engine has a turbocharger for performing a supercharging operation, and
the controlling means (6) realizes the first operating state by invalidating the supercharging operation performed by the turbocharger such that an intake air quantity is decreased.

20. The inspection system as in claim 2, wherein
the controlling means (6), the sensing means (8, 11), the regeneration processing means (S110) and the determining means (S130, S150, S160, S170) are located in a vehicle having the diesel engine, and
the inspection tool (20) is provided separately from the vehicle.

## Patentansprüche

1. Prüfsystem eines Partikelfilterregenerationssystems eines Dieselmotors, **gekennzeichnet durch**:
eine Anordnungseinrichtung (S10) zum Anordnen eines Beginns einer Prüfung des Partikelfilterregenerationssystems;
eine Steuerungseinrichtung (6) zum Steuern eines Betriebszustands des Motors zum Umschalten des Motors zwischen einem ersten Betriebszustand, in dem leicht partikelförmige Stoffe erzeugt werden, und einem zweiten Betriebszustand, in dem die Erzeugung der partikelförmigen Stoffe gehemmt wird, basierend auf der Anordnung des Beginns der Prüfung;
eine Erfassungseinrichtung (8, 11) zum Erfassen einer für eine Ablagerungsmenge der an einem Partikelfilter (4) abgelagerten partikelförmigen Stoffe relevanten physikalischen Größe;
eine Regenerationsverarbeitungseinrichtung (S110) zum Beginnen einer Regenerationsverarbeitung des Partikelfilters (4), falls es bestimmt wird, dass die Ablagerungsmenge der partikelförmigen Stoffe eine erste vorbestimmte Menge erreicht; und
eine Bestimmungseinrichtung (S130, S150, S160, S170) zum Bestimmen, ob eine Funktion des Partikelfilterregenerationssystems normal ist, basierend darauf, ob die abgelagerten partikelförmigen Stoffe **durch** die Regenerationsverarbeitung beseitigt werden.

2. Prüfsystem nach Anspruch 1, wobei
die Anordnungseinrichtung (S10) durch ein Prüfgerät (20) bereitgestellt wird, und
das Prüfgerät (20) den Beginn der Prüfung durch ein Übertragen eines vorbestimmten Befehls zu der den Betriebszustand des Motors steuernden Steuerungseinrichtung (6) anordnet.

3. Prüfsystem nach Anspruch 1, wobei
die Anordnungseinrichtung (S10) durch die den Betriebszustand des Motors steuernde Steuerungseinrichtung (6) bereitgestellt wird,
die Steuerungseinrichtung (6) auf einen für den Betrieb des Partikelfilterregenerationssystems relevante Betriebsdaten speichernden Speicherbereich Bezug nimmt, und
die Steuerungseinrichtung (6) den Beginn der Prüfung automatisch erkennt, falls die Steuerungseinrichtung (6) erkennt, dass die Betriebsdaten zurückgesetzt worden sind.

4. Prüfsystem nach einem der Ansprüche 1 bis 3, ferner mit:
einer Ablagerungsverarbeitungsanomaliebestimmungseinrichtung (S60, S80, S170) zum Durchführen einer Anomaliebestimmung der Ablagerungsverarbeitung, falls die basierend auf der durch die Erfassungseinrichtung (8, 11) erfassten physikalischen Größe berechnete Ablagerungsmenge der partikelförmigen Stoffe die erste vorbestimmte Menge selbst dann nicht erreicht, wenn die Steuerungseinrichtung (6) den Motor in dem ersten Betriebszustand betreibt.

5. Prüfsystem nach einem der Ansprüche 1 bis 4, wobei
die Steuerungseinrichtung (6) den Betriebszustand des Motors zu einem zweiten Betriebszustand, in dem die Erzeugung der partikelförmigen Stoffe verringert wird, steuert, nachdem die Regenerationsverarbeitungseinrichtung (S110) die Regenerationsverarbeitung des Partikelfilters (4) begonnen hat.

6. Prüfsystem nach einem der Ansprüche 1 bis 5, ferner mit:
einer Speichereinrichtung (S100, S140) zum Speichern einer Unvollständigkeit der Regenerationsverarbeitung, falls die Regenerationsverarbeitung durch die Regenerationsverarbeitungseinrichtung (S110) unterbrochen wird, nachdem die partikelförmigen Stoffe an dem Partikelfilter (4) abgelagert sind.

7. Prüfsystem nach einem der Ansprüche 1 bis 6, ferner mit:
einer Fehlerdiagnoseeinrichtung (S210, S220, S230, S240, S221, S231, S241) zum Durchführen einer Fehlerdiagnose von das Partikelfilterregenerationssystem bildenden Teilen während die Steuerungseinrichtung (6) den Motor in dem ersten Betriebszustand betreibt oder während die Regenerationsverarbeitungseinrichtung (S110) die Regenerationsverarbeitung des Partikelfilters (4) durchführt.

8. Prüfsystem nach Anspruch 7, ferner mit:
einer Anhalteeinrichtung (S50, S120) zum Anhalten des Betriebs des Motors in dem durch die Steuerungseinrichtung (6) durchgeführten ersten Betriebszustand und der durch die Regenerationsverarbeitungseinrichtung (S110) durchgeführten Regenerationsverarbeitung, falls durch die Fehlerdiagnoseeinrichtung (S210, S220, S230, S240, S221, S231, S241) ein Fehler festgestellt wird.

9. Prüfsystem nach Anspruch 7 oder 8, wobei
die Fehlerdiagnoseeinrichtung (S210, S220, S230, S240, S221, S231, S241) den Fehler der Erfassungseinrichtung (8, 11) durch ein Vergleichen einer tatsächlichen physikalischen Größe, die tatsächlich durch die Erfassungseinrichtung (8, 11) erfasst wird, mit einer vorhergesagten physikalischen Größe, die durch die Erfassungseinrichtung (8, 11) erfasst werden sollte, wenn der Motor in dem ersten Betriebszustand betrieben wird, und/oder einer vorhergesagten physikalischen Größe, die durch die Erfassungseinrichtung (8, 11) erfasst werden sollte, wenn die Regenerationsverarbeitungseinrichtung (S110) die Regenerationsverarbeitung durchführt, diagnostiziert.

10. Prüfsystem nach einem der Ansprüche 1 bis 9, ferner mit:
einer Sammelwertspeichereinrichtung (S610) zum Berechnen einer Differenz zwischen einer tatsächlichen physikalische Größe, die tatsächlich durch die Erfassungseinrichtung (8, 11) erfasst wird, und einer vorhergesagten physikalischen Größe, die durch die Erfassungseinrichtung (8, 11) erfasst werden sollte, wenn der Motor in dem ersten Betriebszustand betrieben wird, und/oder einer vorhergesagten physikalischen Größe, die durch die Erfassungseinrichtung (8, 11) erfasst werden sollte, wenn die Regenerationsverarbeitungseinrichtung (S110) die Regenerationsverarbeitung durchführt, und zum Speichern der Differenz als einen Korrekturwert der durch die Erfassungseinrichtung (8, 11) erfassten physikalischen Größe.

11. Prüfsystem nach einem der Ansprüche 1 bis 10, ferner mit:
einer den Partikelfilter (4) ausschließenden Emissionsreinigungsvorrichtung (13); und
einer Emissionsreinigungsvorrichtungsfehlerdiagnoseeinrichtung (S300, S310) zum Durchführen einer Fehlerdiagnose der Emissionsreinigungsvorrichtung (13), wobei
die Emissionsreinigungsvorrichtungsfehlerdiagnoseeinrichtung (S300, S310) die Fehlerdiagnose der Emissionsreinigungsvorrichtung (13) außer Kraft setzt während die Steuerungseinrichtung (6) den Motor in dem ersten Betriebszustand betreibt oder während die Regenerationsverarbeitungseinrichtung (S110) die Regenerationsverarbeitung durchführt.

12. Prüfsystem nach einem der Ansprüche 1 bis 11, ferner mit:
einer Periodenspeichereinrichtung (S70, S140) zum Speichern einer Zwangsablagerungsperiode, in der die Steuerungseinrichtung (6) den Motor in dem ersten Betriebszustand betreibt, und einer Zwangsregenerationsperiode, in der die Regenerationsverarbeitungseinrichtung (S110) die Regenerationsverarbeitung durchführt.

13. Prüfsystem nach einem der Ansprüche 1 bis 12, wobei
die Steuerungseinrichtung (6) den ersten Betriebszustand durch ein Erhöhen einer Kraftstoffeinspritzmenge auf mehr als üblich realisiert.

14. Prüfsystem nach einem der Ansprüche 1 bis 13, wobei
der Motor ein Abgasrückführungsventil zum Rückführen eines Teils von Abgas des Motors in Ansaugluft aufweist, und
die Steuerungseinrichtung (6) den ersten Betriebszustand durch ein volles Öffnen des Abgasrückführungsventils realisiert.

15. Prüfsystem nach einem der Ansprüche 1 bis 14, wobei
die Steuerungseinrichtung (6) den ersten Betriebszustand durch ein Ausbilden eines Kraftstoffnebels, der in jeden Zylinder des Motors eingespritzt wird, derart grob, dass eine Größe jedes Kraftstofftröpfchens des Kraftstoffs vergrößert wird, realisiert.

16. Prüfsystem nach einem der Ansprüche 1 bis 15, wobei der Motor ein Common Rail aufweist, und
die Steuerungseinrichtung (6) den ersten Betriebszustand durch ein Verringern eines Common-Rail-Drucks von einem passenden Wert her realisiert.

17. Prüfsystem nach einem der Ansprüche 1 bis 16, wobei
die Steuerungseinrichtung (6) den ersten Betriebszustand durch ein Umschalten von einer Mehrstufeneinspritzung von Kraftstoff zu einer Einstufeneinspritzung des Kraftstoffs derart, dass eine Verbrennungstemperatur verringert wird, realisiert.

18. Prüfsystem nach einem der Ansprüche 1 bis 17, wobei
die Steuerungseinrichtung (6) den ersten Betriebszustand durch ein Verzögern eines Kraftstoffeinspritzzeitpunkts derart, dass ein Druck in einem Zylinder des Motors verringert wird, realisiert.

19. Prüfsystem nach einem der Ansprüche 1 bis 18, wobei
der Motor einen Turbolader zum Durchführen eines Aufladevorgangs aufweist, und
die Steuerungseinrichtung (6) den ersten Betriebszustand durch ein Aussetzen des durch den Turbolader durchgeführten Aufladevorgangs derart, dass eine Ansaugluftmenge verringert wird, realisiert.

20. Prüfsystem nach Anspruch 2, wobei
die Steuerungseinrichtung (6), die Erfassungseinrichtung (8, 11), die Regenerationsverarbeitungseinrichtung (S110) und die Bestimmungseinrichtung (S130, S150, S160, S170) sich in einem den Dieselmotor aufweisenden Fahrzeug befinden, und
das Prüfgerät (20) getrennt von dem Fahrzeug bereitgestellt ist.

## Revendications

1. Un système d'inspection d'un système de régénération de filtre à particules d'un moteur diesel, **caractérisé par** :
un moyen de génération d'ordre (S10) pour ordonner un démarrage d'inspection du système de régénération de filtre à particules;
un moyen de commande (6) pour commander un état de fonctionnement du moteur de façon à changer l'état de fonctionnement du moteur entre un premier état de fonctionnement, dans lequel des matières particulaires sont aisément générées, et un second état de fonctionnement, dans lequel la génération des matières particulaires est empêchée, sur la base de l'ordre du démarrage de l'inspection;
un moyen de détection (8, 11) pour détecter une grandeur physique liée à une quantité de dépôt des matières particulaires déposées sur le filtre à particules (4);
un moyen de traitement de régénération (S110) pour faire démarrer le traitement de régénération du filtre à particules (4) s'il est déterminé que la quantité de dépôt des matières particulaires atteint une première quantité prédéterminée; et
un moyen de détermination (S130, S150, S160, S170) pour déterminer si un fonctionnement du système de régénération de filtre à particules est normal, sur la base du fait que les matières particulaires déposées sont éliminées ou non par le traitement de régénération.

2. Le système d'inspection selon la revendication 1, dans lequel
le moyen de génération d'ordre (S10) est fourni par un équipement d'inspection (20), et
l'équipement d'inspection (20) ordonne le démarrage de l'inspection en émettant un ordre prédéterminé vers le moyen de commande (6) qui commande l'état de fonctionnement du moteur.

3. Le système d'inspection selon la revendication 1, dans lequel
le moyen de génération (S10) est fourni par le moyen de commande (6) qui commande l'état de fonctionnement du moteur,
le moyen de commande (6) fait référence à une zone de stockage qui stocke des données de fonctionnement concernant le fonctionnement du système de régénération de filtre à particules, et
le moyen de commande (6) reconnaît automatiquement le démarrage de l'inspection si le moyen de commande (6) reconnaît que les données de fonctionnement ont été effacées.

4. Le système d'inspection selon l'une quelconque des revendications 1 à 3, comprenant en outre :
un moyen de détermination d'anomalie de traitement de dépôt (S60, S80, S170) pour effectuer une détermination d'anomalie du traitement de dépôt si la quantité de dépôt des matières particulaires calculée sur la base de la grandeur physique détectée par le moyen de détection (8, 11) n'atteint pas la quantité prédéterminée bien que le moyen de commande (6) fasse fonctionner le moteur dans le premier état de fonctionnement.

5. Le système d'inspection selon l'une quelconque des revendications 1 à 4, dans lequel
le moyen de commande (6) commande l'état de fonctionnement du moteur pour placer celui-ci dans un second état de fonctionnement, dans lequel la génération des matières particulaires est réduite, après que le moyen de traitement de régénération (S110) a fait démarrer le traitement de régénération du filtre à particules (4).

6. Le système d'inspection selon l'une quelconque des revendications 1 à 5, comprenant en outre :
un moyen de stockage (S100, S140) pour stocker une information d'inachèvement du traitement de régénération si le traitement de régénération par le moyen de traitement de régénération (S110) est interrompu après que les matières particulaires se sont déposées sur le filtre à particules (4).

7. Le système d'inspection selon l'une quelconque des revendications 1 à 6, comprenant en outre :
un moyen de diagnostic de défaillance (S210, S220, S230, S240, S221, S231, S241) pour effectuer un diagnostic de défaillance de composants constituant le système de régénération de filtre à particules, pendant que le moyen de commande (6) fait fonctionner le moteur dans le premier état de fonctionnement, ou pendant que le moyen de traitement de régénération (S110) effectue le traitement de régénération du filtre à particules (4).

8. Le système d'inspection selon la revendication 7, comprenant en outre :
un moyen d'arrêt (S50, S120) pour arrêter le fonctionnement du moteur dans le premier état de fonctionnement qui est établi sous l'action du moyen de commande (6), et le traitement de régénération effectué par le moyen de traitement de régénération (S110) si une défaillance est détectée par le moyen de diagnostic de défaillance (S210, S220, S230, S240, S221 , S231, S241).

9. Le système d'inspection selon la revendication 7 ou 8, dans lequel
le moyen de diagnostic de défaillance (S210, S220, S230, S240, S221, S231, S241) diagnostique la défaillance du moyen de détection (8, 11) en comparant une grandeur physique réelle, qui est réellement détectée par le moyen de détection (8, 11), avec au moins une d'une grandeur physique prédite, qui doit être détectée par le moyen de détection (8, 11) lorsqu'on fait fonctionner le moteur dans le premier état de fonctionnement, et d'une grandeur physique prédite qui doit être détectée par le moyen de détection (8, 11) lorsque le moyen de traitement de régénération (S110) effectue le traitement de régénération.

10. Le système d'inspection selon l'une quelconque des revendications 1 à 9, comprenant en outre :
un moyen de stockage de valeur de correction (S610) pour calculer une différence entre une grandeur physique réelle, qui est réellement détectée par le moyen de détection (8, 11), et au moins une d'une grandeur physique prédite qui doit être détectée par le moyen de détection (8, 11) lorsqu'on fait fonctionner le moteur dans le premier état de fonctionnement, et d'une grandeur physique prédite qui doit être détectée par le moyen de détection (8, 11) lorsque le moyen de traitement de régénération (S110) effectue le traitement de régénération, et pour stocker la différence comme une valeur de correction de la grandeur physique détectée par le moyen de détection (8, 11).

11. Le système d'inspection selon l'une quelconque des revendications 1 à 10, comprenant en outre :
un dispositif d'épuration d'émissions (13) excluant le filtre à particules (4); et
un moyen de diagnostic de défaillance de dispositif d'épuration d'émissions (S300, S310) pour effectuer un diagnostic de défaillance du dispositif d'épuration d'émissions (13), dans lequel
le moyen de diagnostic de défaillance de dispositif d'épuration d'émissions (S300, S310) suspend le diagnostic de défaillance du dispositif d'épuration d'émissions (13) pendant que le moyen de commande (6) fait fonctionner le moteur dans le premier état de fonctionnement, ou pendant que le moyen de traitement de régénération (S110) effectue le traitement de régénération.

12. Le système d'inspection selon l'une quelconque des revendications 1 à 11, comprenant en outre :
un moyen de stockage de période (S70, S140) pour stocker une période de dépôt obligatoire, dans laquelle le moyen de commande (6) fait fonctionner le moteur dans le premier état de fonctionnement, et une période de régénération obligatoire, dans laquelle le moyen de traitement de régénération (S110) effectue le traitement de régénération.

13. Le système d'inspection selon l'une quelconque des revendications 1 à 12, dans lequel
le moyen de commande (6) établit le premier état de fonctionnement en augmentant une quantité d'injection de carburant au-delà de la valeur habituelle.

14. Le système d'inspection selon l'une quelconque des revendications 1 à 13, dans lequel
le moteur a une vanne de recyclage de gaz d'échappement pour recycler vers l'air d'admission une partie du gaz d'échappement du moteur, et
le moyen de commande (6) établit le premier état de fonctionnement en ouvrant complètement la vanne de recyclage de gaz d'échappement.

15. Le système d'inspection selon l'une quelconque des revendications 1 à 14, dans lequel
le moyen de commande (6) établit le premier état de fonctionnement en donnant une configuration grossière à du carburant pulvérisé, qui est injecté dans chaque cylindre du moteur, de façon qu'une taille de chaque gouttelette du carburant soit augmentée.

16. Le système d'inspection selon l'une quelconque des revendications 1 à 15, dans lequel
le moteur a une rampe commune, et
le moyen de commande (6) établit le premier état de fonctionnement en diminuant une pression de rampe commune à partir d'une valeur appropriée.

17. Le système d'inspection selon l'une quelconque des revendications 1 à 16, dans lequel
le moyen de commande (6) établit le premier état de fonctionnement en passant d'une injection de carburant en plusieurs phases à une injection de carburant en une seule phase, de façon à diminuer une température de combustion.

18. Le système d'inspection selon l'une quelconque des revendications 1 à 17, dans lequel
le moyen de commande (6) établit le premier état de fonctionnement en retardant un instant d'injection de carburant, de façon qu'une pression dans un cylindre du moteur soit diminuée.

19. Le système d'inspection selon l'une quelconque des revendications 1 à 18, dans lequel
le moteur comporte un turbocompresseur de suralimentation pour effectuer une opération de compression de suralimentation, et
le moyen de commande (6) établit le premier état de fonctionnement en désactivant l'opération de compression de suralimentation qui est effectuée par le turbocompresseur, de façon à diminuer une quantité d'air d'admission.

20. Le système d'inspection selon la revendication 2, dans lequel
le moyen de commande (6), le moyen de détection (8, 11), le moyen de traitement de régénération (S110) et le moyen de détermination (S130, S150, S160, S170) sont placés dans un véhicule ayant le moteur diesel, et
l'équipement d'inspection (20) est établi séparément du véhicule.
